# EUROPÄISCHE PATENTANMELDUNG

(11) **EP 3 236 253 A1**
(43) Veröffentlichungstag der Anmeldung: **25.10.2017**
(21) Anmeldenummer: 17000138.2
(22) Anmeldetag: 27.01.2017
(51) Int. Cl.: G01N 27/90

(54) **VORRICHTUNG ZUM UNTERSUCHEN VON PRÜFKÖRPERN**

(30) Priorität: 21.04.2016 DE 102016004803
(71) Anmelder: H & T Marsberg GmbH & Co. KG, 34431 Marsberg (Bredelar) (DE)
(72) Erfinder: Götte, Tobias, 34431 Marsberg (DE)
(74) Vertreter: Cohausz Hannig Borkowski Wißgott

(57) **Zusammenfassung**

Vorrichtung zum Untersuchen von Prüfkörpern durch eine Prüfeinrichtung insbesondere eine Wirbelstromprüfeinrichtung, durch deren Prüfkanal die Prüfkörper bewegt werden und wobei durch den Prüfkanal ein Transportband verläuft, das durch den Prüfkanal und/oder durch ein vor und/oder in dem Prüfkanal angeordnetes Führungselement zu einer Rinne geformt ist, die die Prüfkörper zumindest im Bereich der Prüfstrecke umfasst.

## Beschreibung

Die Erfindung betrifft eine Vorrichtung zum Untersuchen von Prüfkörpern durch eine Prüfeinrichtung insbesondere eine Wirbelstromprüfeinrichtung, durch deren Prüfkanal die Prüfkörper bewegt werden.

Es ist bekannt, Materialfehler von metallenen Teilen durch eine Wirbelstromprüfung zu erkennen. Hierbei werden im zu untersuchenden Material Wirbelströme induziert und Abweichungen der elektrischen Leitfähigkeit gemessen. Bei Prüfkörpern, die nicht durchgehend zylindrisch sind und z.B. Aufweitungen oder Absetzungen aufweisen, hat es sich gezeigt, dass eine exakte Führung des Prüfkörpers durch den Prüfkanal nicht möglich ist, da die Prüfkörper ihre Lage verändern, insbesondere kippen.

Es ist zwar bekannt, Prüfkörper über ein Transportband einer Strahlenquelle zuzuführen, wie dies die EP 0311 177 B1 insbesondere für Gepäckstücke zeigt, aber ein solches Transportband eignet sich nicht für eine exakte Führung von zylindrischen Prüfkörpern mit äußeren Abweichungen.

Aufgabe der Erfindung ist es, eine konstruktiv einfache Vorrichtung zum Untersuchen von Prüfkörpern zu schaffen, bei der eine sichere Führung im Prüfkanal auch dann gegeben ist, wenn die Prüfkörper außenseitig über ihre gesamte Länge nicht gleichmäßig zylindrisch geformt sind.

Diese Aufgabe wird erfindungsgemäß dadurch gelöst, dass durch den Prüfkanal ein Transportband verläuft, das durch den Prüfkanal und/oder durch ein vor und/oder in dem Prüfkanal angeordnetes Führungselement zu einer Rinne geformt ist, die die Prüfkörper zumindest im Bereich der Prüfstrecke umfasst.

Eine solche Vorrichtung erreicht eine präzise Führung der Prüfkörper durch eine Prüfeinrichtung, insbesondere eine Wirbelstromprüfeinrichtung auch dann, wenn diese Körper außenseitig nicht gleichförmig zylindrisch, rotationssymmetrisch geformt sind. Es werden sichere und reproduzierbare Messergebnisse erreicht und es können die Prüfkörper einzeln nacheinander geprüft werden, ohne einander zu berühren. Zudem wird ein einfaches und sicheres Auflegen und Abnehmen der Prüfkörper beim Transportband erreicht.

Ein besonders sicherer Halt der Prüfkörper auf dem Transportband ist dann gegeben, wenn die Rinne sich in ihrem Querschnitt teilkreisförmig über einen Winkel von 180 bis 200 Grad um die Prüfkörper herum erstreckt. Hierbei ist von Vorteil, wenn das Transportband ein umlaufendes Endlosband ist.

Vorzugsweise wird die Verwendung der erfindungsgemäßen Vorrichtung für rotationssymmetrische Prüfkörper vorgeschlagen, die zumindest über den größten Teil ihrer Länge zylindrisch geformt sind. Hierbei können die Prüfkörper becherförmig oder patronenförmig sein.

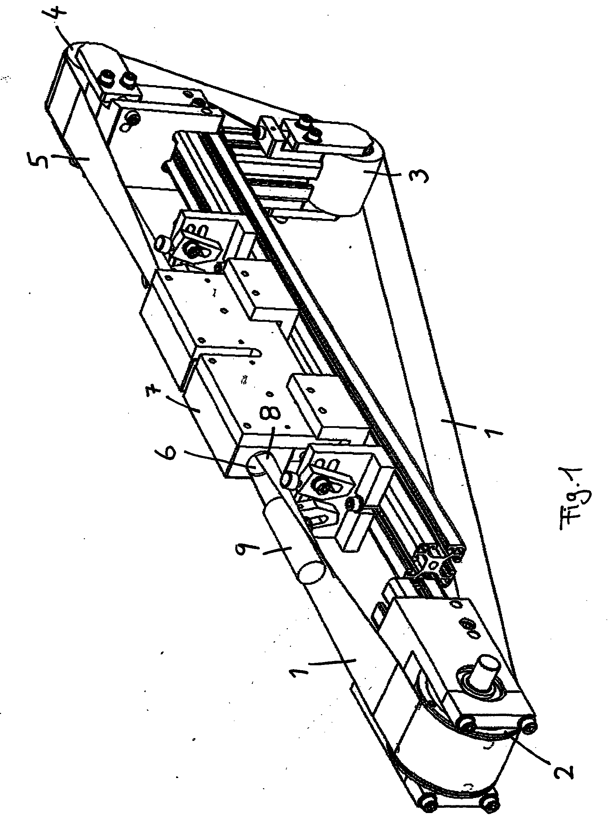

Ein Ausführungsbeispiel der Erfindung ist in der Zeichnung perspektivisch dargestellt und wird im Folgenden näher beschrieben:
Ein flaches Transportband 1 ist als umlaufendes Endlosband über zwei, drei oder mehr Umlenkrollen 2, 3, 4 geführt. Das elektrisch angetriebene Transportband 1 bildet einen oberen waagerechten Bereich 5, der durch den Prüfkanal 6 einer Wirbelstromprüfeinrichtung 7 verläuft.

Der Prüfkanal 6 weist die Form eines Zylinders auf, dessen waagerechte Achse parallel zur Längsrichtung des waagerechten Bandbereichs 5 angeordnet ist. Durch den Prüfkanal 6 wird das Transportband 1 zu einer Rinne 8 geformt, die in ihrem Querschnitt teilkreisförmig ist über einen Winkel von 180 - 300 Grad, so dass die Rinne 8 des Transportbandes zylindrische Prüfkörper 9 umfasst, die auf das Transportband 1 in der Weise gelegt werden, dass die Längsrichtung der Prüfkörper, insbesondere deren Längsachse parallel zur Längsrichtung des Transportbandes und vorzugsweise koaxial zur Achse des Prüfkanals 6 ist.

Die Rinne 8 umfasst damit die Prüfkörper 9 zumindest zur Hälfte und vorzugsweise mehr als zur Hälfte des Umfangs des Prüfkörpers. Der Innendurchmesser der Rinne 8 könnte bei Prüfkörpern mit gleichmäßig zylindrischer Außenform gleich den dem Außendurchmesser des Prüfkörpers sein. Bei Prüfkörpern mit Vorsprüngen, insbesondere mindestens einem vorstehenden Ring oder Flansch ist dafür gesorgt, dass der Innendurchmesser der Rinne 8 mindestens so groß ist, wie der Außendurchmesser des Rings oder Flansches. Hierbei ist der Innendurchmesser des zylindrischen Prüfkanals 6 gleich groß wie der Außendurchmesser der Rinne 8.

Das Transportband 1 wird somit durch den Prüfkanal 6 oder durch vor dem Prüfkanal angeordnete nicht dargestellte Führungselemente im Bereich der Prüfeinrichtung derart den Prüfkörper umschließend geformt, dass innerhalb der Prüfeinrichtung in einem exakten Abstand der Prüfkörper von dem oder den Sensoelementen geführt werden, so dass sich eine gleichmäßige spiralförmige Prüfspur bildet. Nachdem der Prüfkörper den Prüfbereich bzw. den Prüfkanal verlassen hat, öffnet sich das Förderband und die Prüfkörper können dem Transportband entnommen werden.

## Patentansprüche

1. Vorrichtung zum Untersuchen von Prüfkörpern (9) durch eine Prüfeinrichtung (7) insbesondere eine Wirbelstromprüfeinrichtung, durch deren Prüfkanal (6) die Prüfkörper bewegt werden, **dadurch gekennzeichnet, dass** durch den Prüfkanal (6) ein Transportband (1) verläuft, das durch den Prüfkanal und/oder durch ein vor und/oder in dem Prüfkanal angeordnetes Führungselement zu einer Rinne (8) geformt ist, die die Prüfkörper (9) zumindest im Bereich der Prüfstrecke umfasst.

2. Vorrichtung nach Anspruch 1, **dadurch gekennzeichnet, dass** die Rinne (8) sich in ihrem Querschnitt teilkreisförmig über einen Winkel von 180 bis 200 Grad um die Prüfkörper (9) herum erstreckt.

3. Vorrichtung nach Anspruch 1 oder 2, **dadurch gekennzeichnet, dass** das Transportband (1) ein umlaufendes Endlosband ist.

4. Verwendung einer Vorrichtung nach einem der vorherigen Ansprüche bei rotationssymmetrischen Prüfkörpern (9), die zumindest über den größten Teil ihrer Länge zylindrisch geformt sind.

5. Verwendung nach Anspruch 4, **dadurch gekennzeichnet, dass** die Prüfkörper (9) becherförmig oder patronenförmig sind.
